# EUROPEAN PATENT APPLICATION

(11) **EP 4 618 605 A1**
(43) Date of publication of application: **17.09.2025**
(21) Application number: 23902542.2
(22) Date of filing: 05.12.2023
(51) Int. Cl.: H04W 12/06, H04L 9/08, H04L 9/32, H04W 12/069, H04L 9/40

(54) **COMMUNICATION METHOD AND APPARATUS**

(30) Priority: 14.12.2022 CN 202211610268
(71) Applicant: Huawei Technologies Co., Ltd., Shenzhen, Guangdong 518129 (CN)
(72) Inventor: GUO, Yanfei, Shenzhen, Guangdong 518129 (CN); WU, Yizhuang, Shenzhen, Guangdong 518129 (CN); LIU, Wenfeng, Shenzhen, Guangdong 518129 (CN); CUI, Yang, Shenzhen, Guangdong 518129 (CN)
(74) Representative: Pfenning, Meinig & Partner mbB
(86) International application number: PCT/CN2023/136409
(87) International publication number: WO 2024/125345

(57) **Abstract**

Embodiments of this application provide a communication method and apparatus. The method includes: A first network element obtains a service authorization certificate, where the service authorization certificate includes authorized resource information, and the service authorization certificate is used by the first network element to access an authorized resource indicated by the authorized resource information; the first network element generates a service request, and signs the service request, where the service request is used to request to access a target resource of a second network element, and the target resource is included in the authorized resource; the second network element receives the service authorization certificate and the signed service request from the first network element, and determines a service response based on the service authorization certificate and the signed service request, where the response message indicates whether the second network element provides an access service corresponding to the target resource. In this way, the first network element may access a service resource based on the service authorization certificate, to improve accuracy of service authorization.

## Description

### CROSS-REFERENCE TO RELATED APPLICATIONS

This application claims priority to Chinese Patent Application No. 202211610268.8, filed with the China National Intellectual Property Administration on December 14, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

The 3rd generation partnership project (3rd generation partnership project, 3GPP) proposes to use a service-based architecture (service-based architecture, SBA) in a 5th generation (5th generation, 5G) mobile communication system. In the SBA, authentication and service authorization between a plurality of network function (network function, NF) network elements (also referred to as NF network elements, network elements for short below) are decoupled. In other words, the authentication and the service authorization are completed by using different mechanisms. In the mobile communication system, a service authorization relationship between the plurality of network elements is that a network element having a service resource may provide a service for a network element that applies for the service resource. An accessed network element (that is, the network element having the service resource) is referred to as a network element service producer (NF Service producer), and the network element that applies for the service resource is referred to as a network element service consumer (NF Service consumer). A network repository function (network repository function, NRF) network element (also referred to as an NRF network element, an NRF for short below) may be responsible for performing registration, status monitoring, and the like on a service provided by an NF, to implement automatic management, selection, and scalability of the service of the network element, and allow each network element to discover a service provided by another network element.

A conventional service authorization process includes: The NF service consumer applies to the NRF for an access token (access token) that has authorization of the service resource of the NF service producer, where the access token is bound to the service resource. The NRF generates the access token and sends the access token to the network element service consumer. Use duration of the access token depends on a predefined validity period in the access token. After obtaining the access token, the network element service consumer may request a service from the network element service producer for a plurality of times by using the access token based on a service requirement.

In this way, the network element service producer can only rely on the access token to determine authorization owned by the network element service consumer and the validity period. Because the access token is bound only to a service resource that is applied for by the network element service consumer once, when the network element service consumer needs to access another service resource, the network element service consumer needs to apply for another token. As a result, flexibility of implementing service authorization by using the access token is low. In addition, because the validity period of the access token is fixed, even if the network element service producer revokes the service authorization for the network element service consumer, the network element service consumer may still request a service corresponding to the service resource bound to the access token within the validity period of the access token. As a result, accuracy of implementing the service authorization by using the access token is low.

### SUMMARY

Embodiments of this application provide a communication method and apparatus, to implement access to a service resource by using a service authorization certificate, and improve accuracy of service authorization.

According to a first aspect, an embodiment of this application provides a communication method. The method includes: A first network element obtains a service authorization certificate, where the service authorization certificate includes authorized resource information, and the service authorization certificate is used by the first network element to access an authorized resource indicated by the authorized resource information; the first network element generates a service request, and signs the service request, where the service request is used to request to access a target resource of a second network element, and the target resource is included in the authorized resource; the first network element sends the service authorization certificate and the signed service request to the second network element; and the first network element receives a service response from the second network element, where the response message indicates whether the second network element provides an access service corresponding to the target resource.

In this method, a service resource is accessed by using the service authorization certificate, thereby improving accuracy of service authorization. In addition, because the service authorization certificate may be used to access a plurality of different types of authorized resource information, the service authorization certificate does not need to be obtained again for each time of access. This avoids frequent application for a new service authorization certificate, and reduces a waste of resources.

In a possible design, the authorized resource information includes at least one of the following: an identifier of a network element that is authorized to be accessed, a type of a network element that is authorized to be accessed, an identifier of a network slice that is authorized to be accessed, a type of a service that is authorized to be accessed, or a type of a resource that is authorized to be accessed.

In this design, there are a plurality of types of authorized resource information. For example, the authorized resource information is at a slice granularity, a network element granularity, and a service type granularity. Therefore, the method shown in this application can implement management of authorized resource information at different granularities, thereby improving accuracy of the service authorization certificate.

In a possible design, that a first network element obtains a service authorization certificate includes: The first network element sends a certificate issuance request to a certificate authority (certificate authority, CA); and the first network element receives the service authorization certificate from the CA, where the authorized resource information is determined based on resource configuration information of at least one third network element, and the at least one third network element includes the second network element.

In this design, the CA may determine the authorized resource information of the first network element based on resource configuration information of a network element other than the first network element, to determine the service authorization certificate of the first network element, and improve accuracy of the service authorization certificate.

In a possible design, that the first network element sends a certificate issuance request to a certificate authority CA includes: The first network element sends the certificate issuance request to the CA through an NRF, to enable the NRF to determine the authorized resource information based on the resource configuration information of the at least one third network element and send the authorized resource information to the CA. That the first network element receives the service authorization certificate from the CA includes: The first network element receives the service authorization certificate from the CA through the NRF.

In this design, the first network element may interact with the CA through the NRF, to obtain the service authorization certificate. In other words, the CA does not need to store the resource configuration information of the network element or the network slice and can obtain the authorized resource information of the network element, thereby improving flexibility in a service authorization certificate issuance process.

In a possible design, the first network element is a network element in a network slice, the certificate issuance request further includes an identifier of the network slice, and when resource configuration information of a fourth network element includes the identifier of the network slice, the authorized resource information includes an identifier of the fourth network element, and the at least one third network element includes the fourth network element.

In this design, when the first network element belongs to a network slice, the first network element may have an authorized resource corresponding to the network slice. For example, when the fourth network element can provide a service for the network slice, the fourth network element may further provide a service for the first network element. In this way, the CA may determine the authorization information of the first network element based on the network slice to which the first network element belongs, to improve accuracy of the service authorization certificate.

In a possible design, the method further includes: The first network element receives a certificate update notification from the NRF, where the certificate update notification indicates that resource configuration information of at least one fifth network element has been updated; the first network element determines a certificate update request based on the certificate update notification, and signs the certificate update request; the first network element sends the service authorization certificate and the signed certificate update request to the CA; and the first network element receives an updated service authorization certificate from the NRF, and updates the service authorization certificate; or the first network element receives an updated service authorization certificate from the CA, and updates the service authorization certificate, where the updated service authorization certificate is used by the first network element to access a target resource in the resource configuration information of the at least one fifth network element.

In this design, when resource configuration information of a network element or a network slice changes, a corresponding service authorization certificate may be synchronously updated, thereby reducing a probability of an access failure of the first network element, and reducing unnecessary signaling overheads.

According to a second aspect, an embodiment of this application provides a communication method. The method includes: A second network element receives a service authorization certificate and a signed service request from a first network element, where the service authorization certificate includes authorized resource information, the service authorization certificate is used by the first network element to access an authorized resource indicated by the authorized resource information, the service request is used to request to access a target resource of the second network element, and the target resource is included in the authorized resource; the second network element determines a service response based on the service authorization certificate and the signed service request, where the response message indicates whether the second network element provides an access service corresponding to the target resource; and the second network element sends the service response to the first network element.

In a possible design, the authorized resource information includes at least one of the following: an identifier of a network element that is authorized to be accessed, a type of a network element that is authorized to be accessed, an identifier of a network slice that is authorized to be accessed, a type of a service that is authorized to be accessed, or a type of a resource that is authorized to be accessed.

In a possible design, the method further includes: The second network element verifies a signature value of the service request based on the service authorization certificate, and determines that the verification succeeds.

According to a third aspect, an embodiment of this application provides a communication method. The method includes: A CA receives a certificate issuance request from a first network element; the CA determines a service authorization certificate, where the service authorization certificate includes authorized resource information, and the service authorization certificate is used by the first network element to access an authorized resource indicated by the authorized resource information; and the CA sends the service authorization certificate to the first network element.

In a possible design, the authorized resource information includes at least one of the following: an identifier of a network element that is authorized to be accessed, a type of a network element that is authorized to be accessed, an identifier of a network slice that is authorized to be accessed, a type of a service that is authorized to be accessed, or a type of a resource that is authorized to be accessed.

In a possible design, that a CA receives a certificate issuance request from a first network element includes: The CA receives the certificate issuance request from the first network element through an NRF; and the CA receives the authorized resource information from the NRF, where the authorized resource information is determined based on resource configuration information of at least one third network element. That the CA sends the service authorization certificate to the first network element includes: The CA sends the service authorization certificate to the first network element through the NRF.

In a possible design, the first network element is a network element in a network slice, the certificate issuance request further includes an identifier of the network slice, and when resource configuration information of a fourth network element includes the identifier of the network slice, the CA determines that the authorized resource information includes an identifier of the fourth network element, and the at least one third network element includes the fourth network element.

In a possible design, the method further includes: The CA receives the service authorization certificate and a signed certificate update request from the first network element; the CA determines an updated service authorization certificate based on the service authorization certificate and the signed certificate update request; and the CA sends the updated service authorization certificate to the NRF; or the CA sends the updated service authorization certificate to the first network element, where the updated service authorization certificate is used by the first network element to access a target resource in resource configuration information of at least one fifth network element.

In a possible design, the method further includes: The CA receives a certificate revocation notification from the NRF; or the CA receives a certificate revocation notification from a network management device, where the certificate revocation notification indicates that the authorized resource indicated by the service authorization certificate has been revoked; and the CA revokes the service authorization certificate, where the revoked service authorization certificate is no longer used by the first network element to access the authorized resource indicated by the authorized resource information.

In this design, when a service resource corresponding to the service authorization certificate does not exist, or an access subject of the service authorization certificate does not exist, the service authorization certificate is revoked, to avoid a problem that a network element accesses a service resource by using an old service authorization certificate, and improve accuracy of service authorization.

According to a fourth aspect, an embodiment of this application provides a communication method. The method includes: An NRF receives a certificate issuance request from a first network element, where the certificate issuance request is used to request to obtain a service authorization certificate, and the service authorization certificate is used by the first network element to access an authorized resource indicated by authorized resource information; the NRF determines the authorized resource information based on resource configuration information of at least one third network element; and the NRF sends the authorized resource information to a CA, where the service authorization certificate includes the authorized resource information.

In a possible design, the authorized resource information includes at least one of the following: an identifier of a network element that is authorized to be accessed, a type of a network element that is authorized to be accessed, an identifier of a network slice that is authorized to be accessed, a type of a service that is authorized to be accessed, or a type of a resource that is authorized to be accessed.

In a possible design, the method further includes: The NRF sends a certificate update notification to the first network element, where the certificate update notification indicates that resource configuration information of at least one fifth network element has been updated; and the NRF sends an updated service authorization certificate to the first network element, where the updated service authorization certificate is used by the first network element to access a target resource in the resource configuration information of the at least one fifth network element.

In a possible design, the method further includes: The NRF sends a certificate revocation notification to the CA, where the certificate revocation notification indicates that the authorized resource indicated by the service authorization certificate has been revoked, and the revoked service authorization certificate is no longer used by the first network element to access the authorized resource indicated by the authorized resource information.

According to a fifth aspect, an embodiment of this application provides a communication apparatus, including modules configured to perform steps in the first aspect. Optionally, the communication apparatus includes a communication module and a processing module, where the communication module is configured to receive and send data, and the processing module is configured to perform the method provided in the first aspect. For example, the communication apparatus may be used in a first network element.

For example, the communication module is configured to obtain a service authorization certificate, where the service authorization certificate includes authorized resource information, and the service authorization certificate is used by a first network element to access an authorized resource indicated by the authorized resource information. The processing module is configured to: generate a service request, and sign the service request, where the service request is used to request to access a target resource of a second network element, and the target resource is included in the authorized resource. The communication module is further configured to: send the service authorization certificate and the signed service request to the second network element; and receive a service response from the second network element, where the response message indicates whether the second network element provides an access service corresponding to the target resource.

For example, the communication module is configured to receive a service authorization certificate and a signed service request from a first network element, where the service authorization certificate includes authorized resource information, the service authorization certificate is used by the first network element to access an authorized resource indicated by the authorized resource information, the service request is used to request to access a target resource of a second network element, and the target resource is included in the authorized resource. The processing module is configured to determine a service response based on the service authorization certificate and the signed service request, where the response message indicates whether the second network element provides an access service corresponding to the target resource. The communication module is further configured to send the service response to the first network element.

For example, the communication module is configured to receive a certificate issuance request from a first network element. The processing module is configured to determine a service authorization certificate, where the service authorization certificate includes authorized resource information, and the service authorization certificate is used by the first network element to access an authorized resource indicated by the authorized resource information. The communication module is further configured to send the service authorization certificate to the first network element.

For example, the communication module is configured to receive a certificate issuance request from a first network element, where the certificate issuance request is used to request to obtain a service authorization certificate, and the service authorization certificate is used by the first network element to access an authorized resource indicated by authorized resource information. The processing module is configured to determine the authorized resource information based on resource configuration information of at least one third network element. The communication module is further configured to send the authorized resource information to a CA, where the service authorization certificate includes the authorized resource information.

According to a sixth aspect, an embodiment of this application provides a communication device, including a processor, a memory, and a processor. A communication interface is configured to receive and send data; the memory is configured to store program instructions and data; and the processor is configured to read the program instructions and the data in the memory, to implement the method provided in the first aspect. For example, the communication device may be a first network element, a second network element, or a CA.

According to a seventh aspect, an embodiment of this application provides a communication device, including at least one processing element and at least one storage element. The at least one storage element is configured to store a program and data, and the at least one processing element is configured to perform the method provided in the first aspect of this application. For example, the communication device may be a first network element, a second network element, or a CA.

According to an eighth aspect, an embodiment of this application further provides a computer program. When the computer program is run on a computer, the computer is enabled to perform the method provided in the first aspect. Optionally, the computer may be a first network element, a second network element, or a CA, or may be the foregoing communication apparatus or communication device.

According to a ninth aspect, an embodiment of this application further provides a computer-readable storage medium. The computer-readable storage medium stores a computer program, and when the computer program is executed by a computer, the computer is enabled to perform the method provided in the first aspect. Optionally, the computer may be a base station, or may be the foregoing communication apparatus or communication device.

According to a tenth aspect, an embodiment of this application further provides a chip. The chip is configured to read a computer program stored in a memory, to perform the method provided in the first aspect. Optionally, the chip may include a processor and a memory. The processor is coupled to the memory, and is configured to read a computer program stored in the memory, to implement the method provided in the first aspect.

According to an eleventh aspect, an embodiment of this application further provides a chip system. The chip system includes a processor, configured to support a computer apparatus in implementing the method provided in the first aspect. In a possible design, the chip system further includes a memory, and the memory is configured to store a program and data that are necessary for the computer apparatus. The chip system may include a chip, or may include a chip and another discrete component.

For technical effects that can be achieved in any one of the second aspect to the eleventh aspect, refer to descriptions of technical effects that can be achieved in any one of the possible designs of the first aspect. Details are not described herein again.

### BRIEF DESCRIPTION OF DRAWINGS

FIG. 1 is a diagram of a relationship between a network slice and a network element according to an embodiment of this application;
FIG. 2 is a diagram of a structure of a communication system according to an embodiment of this application;
FIG. 3 is a schematic flowchart of a communication method according to an embodiment of this application;
FIG. 4 is a schematic flowchart of another communication method according to an embodiment of this application;
FIG. 5 is an example diagram of issuing a service authorization certificate according to an embodiment of this application;
FIG. 6 is an example diagram of using a service authorization certificate according to an embodiment of this application;
FIG. 7 is an example diagram of updating a service authorization certificate according to an embodiment of this application;
FIG. 8 is an example diagram of revoking a service authorization certificate according to an embodiment of this application;
FIG. 9 is another example diagram of establishing a network slice according to an embodiment of this application;
FIG. 10 is another example diagram of issuing a service authorization certificate according to an embodiment of this application;
FIG. 11 is another example diagram of updating a service authorization certificate according to an embodiment of this application;
FIG. 12 is another example diagram of revoking a service authorization certificate according to an embodiment of this application;
FIG. 13 is a diagram of a structure of a communication apparatus according to an embodiment of this application; and
FIG. 14 is a diagram of a structure of another communication apparatus according to an embodiment of this application.

### DESCRIPTION OF EMBODIMENTS

To make the objectives, technical solutions, and advantages of this application clearer and more comprehensible, the following further describes this application in detail with reference to the accompanying drawings and embodiments. It should be understood that the specific embodiments described herein are merely used to explain this application but are not intended to limit this application.

In the following, some terms in this application are described, to help a person skilled in the art have a better understanding.

(1) Network element: The network element is a device that is used in or defined in 3GPP and has a network processing function. The network element may be a network element (for example, a base station) on dedicated hardware, a software instance operating on the dedicated hardware (where for example, a plurality of NRF instances are instantiated on hardware dedicated to an NRF), or a virtualized function instantiated on a platform (where for example, an NRF and another function network element are instantiated on a cloud infrastructure).

There may be a service authorization relationship between different network elements. An accessed network element (that is, a network element having a service resource) is referred to as a network element service producer, and a network element applying for access (a network element applying for the service resource) is referred to as a network element service consumer. It should be understood that a same network element may be a network element service producer, or may be a network element service consumer.

(2) CA: The CA can be responsible for managing an entire life cycle of a certificate, including issuing the certificate, defining a validity period of the certificate, and revoking the certificate. Optionally, the CA may further include a registration authority (registration authority, RA). The RA can send a certificate issuance request to the CA after obtaining and authenticating a user identity. It should be understood that the RA may be a function integrated in the CA, or may be an independently deployed device. This is not limited in this application. In embodiments of this application, it is assumed that the function of the RA is integrated in the CA.

(3) NRF: The NRF is responsible for performing registration, status monitoring, and the like on a service provided by a network element, to implement network element management. In addition, the NRF allows each network element to discover a service provided by another network element. Correspondingly, when each NF is started, the NF needs to register with the NRF to provide a service. Registered information includes an NF type, an address, a service list, and the like.

(4) Network management device: The network management device refers to a system used by an operator to manage a mobile communication network operated by the operator, and has related network management functions such as network element monitoring, network element orchestration, and network element parameter configuration.

(5) Network slice (Network Slice): The network slice is obtained through virtual division of a network, and may be a specific service or provide a complete end-to-end connection for a user.

In a network slice scenario, a same network slice may include a plurality of network elements, and a same network element may belong to different network slices. Network elements in a same network slice may provide services for each other. The following service authorization relationship may exist between a network slice and a network element: A network element having a service resource may authorize a network slice and provide a service for the network slice. In other words, any network element in the authorized network slice may access the network element having the service resource.

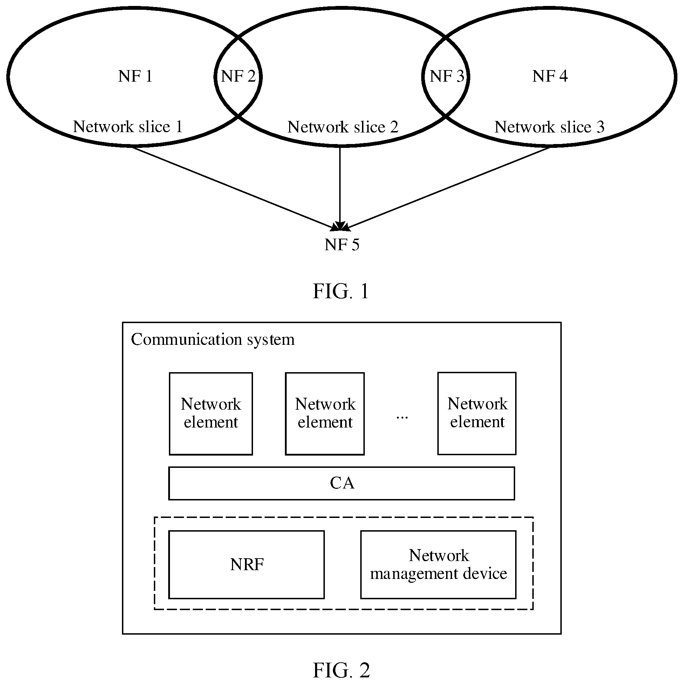

Further, after the network slice is revoked, a service between network elements in another network slice is not interrupted. However, even if the network element in the network slice still exists, because the network slice is revoked, network elements that are no longer in a same network slice no longer provide services for each other. In addition, a network element that is outside the network slice and that has a service resource no longer provides a service for the existing network element. The following provides descriptions with reference to FIG. 1.

As shown in FIG. 1, a network slice 1 includes a network element 1 and a network element 2, a network slice 2 includes the network element 2 and a network element 3, a network slice 3 includes the network element 3 and a network element 4, and a network element 5 does not belong to any network slice. The network element 5 is a network element having a resource, and the network element 5 separately provides a service for the network slice 1, the network slice 2, and the network slice 3. When the network slice 2 is revoked, because the network element 2 and the network element 3 are still in other slices, the network element 2 and the network element 3 still exist. However, in this case, the network element 2 and the network element 3 no longer provide services for each other. In other words, the network element 3 cannot access a service provided by the network element 2, but the network element 1 and the network element 5 can still access the service provided by the network element 2.

It should be understood that, in descriptions of this application, words such as "first" and "second" are merely used for distinction and description, and cannot be understood as an indication or implication of relative importance or an indication or implication of a sequence.

The following describes in detail embodiments of this application with reference to accompanying drawings.

FIG. 2 shows a structure of a communication system to which a method according to an embodiment of this application is applicable. As shown in FIG. 2, the communication system includes at least one network element and a CA.

Optionally, the communication system may further include an NRF. The NRF is configured to perform registration, status monitoring, and the like on a service provided by the network element, to implement network element management. In addition, the NRF further allows each network element to discover a service provided by another network element. Optionally, the communication system may further include a network management device. The network management device may manage a network slice and a network element in a communication network. For example, the network management device may establish a new network slice. The network management device locally stores resource configuration information of the network slice and the network element.

Different network elements (or referred to as conventional network elements) may have interchangeable roles. For example, a network element may serve as a service consumer to access a service resource of a service producer, or may serve as a service producer to provide a service for a service consumer. When a network element service producer and a network element service consumer interchange roles, whether authorization exists needs to be verified, and this process may be implemented by the NRF.

The communication system shown in FIG. 2 may be used in a 3GPP SBA, so that network elements provide services for each other. In this process, two parts of work need to be completed: identity authentication and service authorization. The identity authentication part is completed by using a digital certificate (for example, a transport layer security (transport layer security, TLS) certificate) mechanism. For example, an application procedure is implemented through a certificate initial registration procedure in 3GPP TR 33.876. The service authorization may be implemented by using an open authorization protocol (open authorization, OAuth) 2.0 mechanism.

In the communication system shown in FIG. 2, to improve accuracy of the service authorization, embodiments of this application provide a communication method. The method may be applied to, but is not limited to, a typical service of an access authorization service between network elements in an SBA of a 3GPP 5G mobile communication system. This method no longer uses the OAuth 2.0 mechanism, but can implement the service authorization part in a service resource access process by issuing, updating, and revoking a service authorization certificate.

In this application, an example in which a connection is established (in other words, service authorization is implemented) between network elements in a core network by using a service authorization certificate is used, but this is not limited thereto. For example, with development of future technologies, the communication method shown in this application may be further extended to a communication method between access network devices, between an access network device and a core network, between an access network device and user equipment, between user equipment and user equipment, or between user equipment and a network element. This is not limited in this application. The user equipment or a user terminal includes a mobile phone, an intelligent terminal, a vehicle-mounted terminal, a vehicle-mounted device, a wearable device, a multimedia device, a streaming media device, and the like. The access network device may be a base station, a relay station, an access point, a vehicle-mounted device, a network side device, or the like.

In the system shown in FIG. 2, each time a network element is generated, the network element may be registered with the NRF. The network element may send resource configuration information of the network element to the NRF, and the NRF may directly communicate with the CA. Alternatively, the network management device may send resource configuration information of the network element to the CA. In the communication method provided in this application, the CA may issue, based on resource configuration information of a plurality of network elements serving as service producers, service authorization certificates to different network elements serving as service consumers. Further, the network element serving as the service consumer may apply for accessing a service resource of the network element serving as the service producer. Further, the CA may update or revoke any service authorization certificate, to implement periodic synchronization between the network element and the service authorization certificate. In the following embodiments of this application, an example in which a first network element serves as a service consumer and a second network element serves as a service producer is used for description.

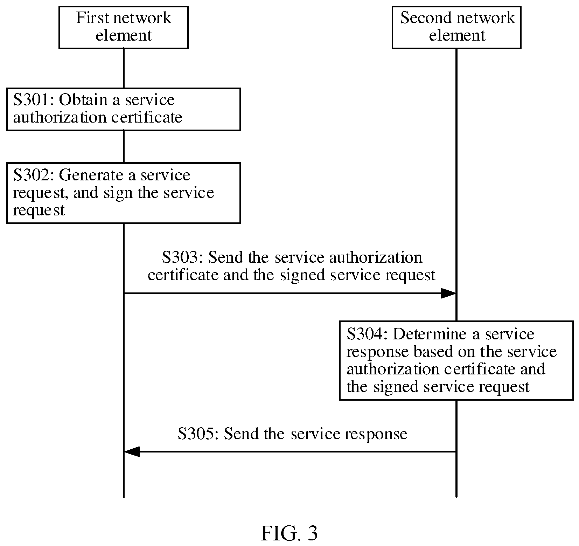

FIG. 3 is a schematic flowchart of a communication method according to an embodiment of this application. The following describes the method provided in this embodiment of this application with reference to FIG. 3. Network elements in the communication system shown in FIG. 2 include a first network element and a second network element. The first network element may serve as a service consumer, and the second network element may serve as a service producer.

S301: The first network element obtains a service authorization certificate, where the service authorization certificate includes authorized resource information, and the service authorization certificate is used by the first network element to access an authorized resource indicated by the authorized resource information. The service authorization certificate may be represented by cert.

In this embodiment of this application, the first network element may obtain the service authorization certificate in, but not limited to, the following manners.

Manner 1: Optionally, the first network element may obtain the local stored service authorization certificate. In this way, because the service authorization certificate in this application can be obtained when the network element is generated and may be stored in the network element, the first network element may reuse the stored service authorization certificate, and does not need to frequently apply for a new service authorization certificate, thereby reducing signaling overheads.

Manner 2: When serving as the service consumer, the first network element may obtain the service authorization certificate, where the service authorization certificate may be a signature certificate obtained through a CA. The CA may obtain resource configuration information of at least one third network element from a network management device, and determine the authorized resource information based on the resource configuration information.

Optionally, the authorized resource information in this application includes at least one of the following: an identifier of a network element that is authorized to be accessed, a type of a network element that is authorized to be accessed, an identifier of a network slice that is authorized to be accessed, a type of a service that is authorized to be accessed. For example, the identifier of the network element that is authorized to be accessed may be represented as a network element instance identifier (NF instance ID), and the type of the network element that is authorized to be accessed may be represented as an NF type.

It should be noted that, in the communication system shown in FIG. 2, the first network element may obtain one service authorization certificate, or may obtain a plurality of service authorization certificates. For example, when the first network element belongs to two or more network slices, the first network element may separately obtain a service authorization certificate related to each network slice.

Optionally, an extension option of the service authorization certificate in this application may include a usage identifier, and the usage identifier indicates that the service authorization certificate is used for service authorization. For example, the CA may write the usage identifier into a key extended usage (key extended usage) extension option of the service authorization certificate.

Optionally, the extension option of the service authorization certificate may further include the authorized resource information of the first network element. For example, the CAmay write the authorized resource information of the first network element into a subject information access (subject information access, SIA) extension option of the service authorization certificate.

In a possible design, the first network element may implement, by using the following steps, an action of obtaining the service authorization certificate in Manner 2.

Step 1: The first network element sends a certificate issuance request to the certificate authority CA.

Optionally, the first network element sends the certificate issuance request to the CA through an NRF, to enable the NRF to determine the authorized resource information based on the resource configuration information of the at least one third network element and send the authorized resource information to the CA. The at least one third network element includes the second network element.

For example, the first network element generates a first public key (pk) and a first private key (sk), and the first network element locally stores information such as the first private key and an identifier of the first network element. The first network element generates a first certificate issuance request based on a certificate management protocol (certificate management protocol version 2, CMPv2) specification and information such as the first public key and the identifier of the first network element, where the first certificate issuance request may be represented by csr 1. The first network element may send csr 1 to the NRF.

Correspondingly, the NRF may determine the authorized resource information based on the resource configuration information of the at least one third network element. The NRF may further determine a second certificate issuance request based on csr 1 and the authorized resource information, where the second certificate issuance request may be represented by csr 2, and csr 2 includes the authorized resource information. The NRF may send csr 2 to the CA.

Further, optionally, the first network element is a network element in a network slice, and the certificate issuance request further includes an identifier of the network slice. Optionally, the first network element may be a network element in a plurality of network slices. Optionally, when the first network element is a network element in a network slice, the authorized resource information may include a set of network slice identifiers. In other words, network elements in a same network slice may provide services for each other. The set of network slice identifiers may be a set of single (single) network slice selection assistance information (network slice selection assistance identifier, NSI-ID), or may be network slice selection assistance information (network slice selection assistance information, NSSAI).

For example, after sending csr 1 to the NRF, the first network element may further send an identifier of one or more network slice to the NRF. Correspondingly, the NRF may determine the authorized resource information based on the resource configuration information of the at least one third network element and the identifier of the one or more network slices. The NRF may further determine the second certificate issuance request based on csr 1 and the authorized resource information, where the second certificate issuance request may be represented by csr 2. The NRF may send csr 2 to the CA, where csr 2 includes the authorized resource information.

Step 2: The CA receives the certificate issuance request from the first network element, and determines the service authorization certificate. The service authorization certificate includes the authorized resource information, the authorized resource information is determined based on the resource configuration information of the at least one third network element, and the at least one third network element includes the second network element. A person skilled in the art should understand that a process of determining the service authorization certificate by the CA described in this application includes that the CA signs the service authorization certificate. Details are not described in other locations.

The CA may receive the certificate issuance request from the first network element through the NRF.

Optionally, the CA may determine the authorized resource information based on the certificate issuance request. Further, the CA may determine the service authorization certificate based on the authorized resource information.

For example, the CA may receive csr 2 from the NRF. The CA may determine csr 1, the authorized resource information, and the NSI-ID (or the NSSAI) based on csr 2. The CA may write the usage identifier into the key extended usage extension option of the service authorization certificate. The CA may write the authorized resource information of the first network element into the SIA extension option of the service authorization certificate.

In this embodiment of this application, when the first network element is a network element in a network slice and resource configuration information of a fourth network element includes an identifier of the network slice, the CA may further determine the service authorization certificate in, but not limited to, the following manners.

The CA determines that the authorized resource information includes an identifier of the fourth network element, and the at least one third network element includes the fourth network element. Optionally, the fourth network element may be a network element in the network slice. In other words, when the resource configuration information of the fourth network element indicates that the fourth network element can provide a service for any network slice to which the first network element belongs, the fourth network element may provide a service for the first network element. Therefore, the CA determines that the authorized resource information includes the identifier of the fourth network element. For example, when the first network element belongs to a network slice, and the resource configuration information of the fourth network element indicates that the fourth network element can provide a service for the network slice, the authorized resource information of the first network element includes the identifier of the fourth network element.

In this embodiment of this application, when the first network element is a network element in a plurality of network slices, the CA may separately determine, based on identifiers of the plurality of network slices, a plurality of service authorization certificates related to the network slices. For example, it is assumed that the first network element belongs to a network slice A, a network slice B, and a network slice C. In this case, the first network element may separately obtain a service authorization certificate related to the network slice A, a service authorization certificate related to the network slice B, and a service authorization certificate related to the network slice C. The service authorization certificate related to the network slice A is used by any network element in the network slice A to access an authorized resource indicated by authorized resource information in the service authorization certificate.

Step 3: The CA sends the service authorization certificate to the first network element. Correspondingly, the first network element receives the service authorization certificate from the CA.

Optionally, the CA may send the service authorization certificate to the first network element through the NRF. Correspondingly, the first network element may receive the service authorization certificate from the CA through the NRF. For example, the CA may send the service authorization certificate of the first network element to the NRF.

Further, after the NRF receives a service authorization certificate, the NRF may verify usage and validity of the service authorization certificate. The NRF may further extract authorized resource information bound to an extension option of the service authorization certificate, and verify whether the authorized resource information is consistent with the authorized resource information that is of the first network element and that is locally stored in the NRF, in other words, determine whether the first network element can access an authorized resource indicated by the authorized resource information in the service authorization certificate. The usage and validity verification of the service authorization certificate includes but is not limited to the following: verification on whether the usage of the service authorization certificate is service authorization, verification on whether the service authorization certificate is within a validity period, verification on whether a signature of the service authorization certificate is valid, and verification on whether the service authorization certificate is revoked. Further, when all of the foregoing verification succeeds, the NRF forwards the service authorization certificate to the first network element; otherwise, the NRF does not perform a forwarding operation, and the NRF may further separately send an authorization failure response message to the first network element and the CA.

Further, optionally, after the first network element receives the service authorization certificate, the first network element may further verify the usage and the validity of the service authorization certificate, and may further verify whether the extension option of the service authorization certificate includes the bound authorized resource information. Further, when all of the foregoing verification succeeds, the first network element may separately send, to the NRF and the CA, a response message indicating that the service authorization certificate is successfully issued.

In this design, the first network element may interact with the CA through the NRF, to obtain the service authorization certificate. In other words, the CA does not need to store the resource configuration information of the network element or the network slice and can obtain the authorized resource information of the network element, thereby improving flexibility in a service authorization certificate issuance process.

S302: The first network element generates a service request, and signs the service request, where the service request is used to request to access a target resource of the second network element, and the target resource is included in the authorized resource.

For example, it is assumed that the first network element expects to access the target resource of the second network element serving as the service producer. In this case, the first network element serving as the service consumer may generate the service request based on a requirement, and sign the service request based on the first private key (sk).

S303: The first network element sends the service authorization certificate and the signed service request to the second network element. Correspondingly, the second network element receives the service authorization certificate and the signed service request from the first network element. The signed service request includes the service request and a signature value.

S304: The second network element determines a service response based on the service authorization certificate and the signed service request, where the response message indicates whether the second network element provides an access service corresponding to the target resource.

Optionally, the second network element verifies the signature value of the service request based on the service authorization certificate, and determines that the verification succeeds. In other words, when the verification succeeds, the second network element determines the response message; otherwise, the second network element terminates step S304, or determines that the response message indicates that the access service corresponding to the target resource is not provided.

Further, optionally, after receiving a service authorization certificate, the second network element may further verify validity of the service authorization certificate. The second network element may further extract authorized resource information bound to an extension option of the service authorization certificate, and verify whether the authorized resource information includes the target resource that is requested to be accessed in the service request, in other words, determine whether the first network element can access the target resource indicated by the service request. The second network element may further verify, based on the service authorization certificate, whether the signature value of the service request is correct, for example, verify a first private key in the signature value based on a first public key in the service authorization certificate. The usage and validity verification of the service authorization certificate includes but is not limited to the following: verification on whether the usage of the service authorization certificate is service authorization, verification on whether the service authorization certificate is within a validity period, verification on whether a signature of the service authorization certificate is valid, and verification on whether the service authorization certificate is revoked. Further, when all of the foregoing verification succeeds, the second network element determines that the response message indicates that the access service corresponding to the target resource can be provided; otherwise, the second network element determines that the response message indicates that the access service corresponding to the target resource is not provided.

S305: The second network element sends the service response to the first network element. Correspondingly, the first network element receives the service response from the second network element.

Optionally, when the service response indicates that the second network element can provide the access service corresponding to the target resource for the first network element, the first network element may access the target resource of the second network element.

It should be understood that, in this application, if the first network element can obtain the service authorization certificate and locally store the service authorization certificate, actions in step S302 to step S305 may be performed for a plurality of times, to access service resources of a plurality of second network elements, or access different service resources of a same second network element. In other words, in this application, the service authorization certificate may be used to access a plurality of different types of authorized resource information, and the service authorization certificate does not need to be obtained again for each time of access. This avoids frequent application for a new service authorization certificate, and reduces a waste of resources.

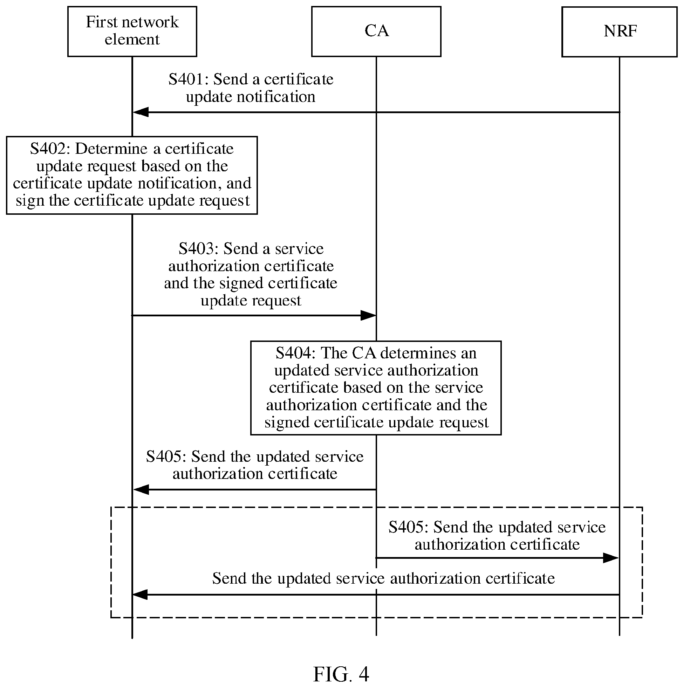

To improve accuracy and flexibility of the service authorization certificate, based on the solution of step S301 to step S305 in this application, an embodiment of this application further provides the following design. The following describes the design provided in this embodiment of this application with reference to FIG. 4.

S401: A first network element receives a certificate update notification from an NRF, where the certificate update notification indicates that resource configuration information of at least one fifth network element has been updated.

It should be understood that, in the foregoing communication system, when resource configuration information of a service producer changes, the service producer initiates a service update request to the NRF, so that resource configuration information locally stored in the NRF is synchronously updated. For example, when resource configuration information of any service producer that is related to the first network element and that corresponds to a service authorization certificate changes, the NRF sends the certificate update notification to the first network element.

Optionally, the NRF may further send updated resource configuration information of the service producer to the first network element. It should be understood that, because a secure channel (for example, a TLS channel or an internet protocol security (internet protocol security, IPsec) channel) has been established between the first network element and the NRF in this case, a resource configuration information update process is encrypted for transmission, and security of a transmission process is high.

In this embodiment of this application, after the first network element receives the certificate update notification, the first network element may generate a second public key (pk') and a second private key (sk').

S402: The first network element determines a certificate update request based on the certificate update notification, and signs the certificate update request.

Optionally, the first network element may determine the certificate update request based on the certificate update notification, the updated resource configuration information of the service producer, and the second public key (pk'), and sign the certificate update request based on a first private key (sk).

S403: The first network element sends the service authorization certificate and the signed certificate update request to a CA. Correspondingly, the CA receives the service authorization certificate and the signed certificate update request from the first network element. The signed certificate update request includes the certificate update request and a signature value of the certificate update request.

For example, the first network element may send, to the CA, the service authorization certificate that is not updated, in other words, the first network element sends cert to the CA. Correspondingly, the CA receives cert from the first network element.

S404: The CA determines an updated service authorization certificate based on the service authorization certificate and the signed certificate update request. The updated service authorization certificate may be represented by cert'.

For example, after receiving the signed certificate update request, the CA may determine, based on cert, whether verification on the signature value succeeds.

Further, when the verification succeeds, the CA determines cert' based on the certificate update request.

Optionally, after determining the updated service authorization certificate, the CA may further revoke the service authorization certificate that is not updated, that is, revoke cert. It should be understood that the revoked service authorization certificate is no longer used by the first network element to access an authorized resource indicated by authorized resource information.

S405: The CA sends the updated service authorization certificate to the first network element; or the CA sends the updated service authorization certificate to the NRF. Correspondingly, the first network element receives the updated service authorization certificate from the NRF, and updates the service authorization certificate; or the first network element receives the updated service authorization certificate from the NRF, and updates the service authorization certificate. The updated service authorization certificate is used by the first network element to access a target resource in the resource configuration information of the at least one fifth network element.

After receiving the updated service authorization certificate, the NRF may verify usage and validity of cert'. The NRF may further extract authorized resource information from an extension option of cert', and verify whether the authorized resource information is consistent with updated authorized resource information that is of the first network element and that is locally stored in the NRF, in other words, determine whether the first network element can access an authorized resource indicated by the authorized resource information in cert'. The usage and validity verification of cert' includes but is not limited to the following: verification on whether the usage of cert' is service authorization, verification on whether cert' is within a validity period, verification on whether a signature of cert' is valid, and verification on whether cert' is revoked. Further, when all of the foregoing verification succeeds, the NRF forwards the updated service authorization certificate to the first network element; otherwise, the NRF does not perform a forwarding operation, and the NRF may further separately send an update failure response message to the first network element and the CA.

Further, optionally, after the first network element receives the updated service authorization certificate, the first network element may further verify the usage and the validity of cert', and may further verify whether the extension option of cert' includes the authorized resource information. Further, when all of the foregoing verification succeeds, the first network element may separately send an update success response message to the NRF and the CA.

Optionally, after step S405, to be specific, after the service authorization certificate is updated, the first network element may access a target resource of a second network element by using the solution in step S302 to step S305. Optionally, in step S302, the service request may be signed by using the second private key (sk'). Similarly, in step S305, the second network element may verify, based on the second public key (pk') in the updated service authorization certificate, the second private key (sk') in the signature value of the service request.

In this design, when resource configuration information of a network element or a network slice changes, a corresponding service authorization certificate may be synchronously updated, thereby reducing a probability of an access failure of the first network element, and reducing unnecessary signaling overheads.

In a possible design, the CA receives a certificate revocation notification from the NRF, where the certificate revocation notification indicates that the authorized resource indicated by the service authorization certificate has been revoked. Further, the CA revokes the service authorization certificate. It should be understood that the revoked service authorization certificate is no longer used by the first network element to access the authorized resource indicated by the authorized resource information.

Optionally, when some or all network elements related to a service authorization certificate are deregistered, the NRF sends the certificate revocation notification to the CA.

Optionally, the CA may implement revocation of the service authorization certificate by placing a serial number of the service authorization certificate in a certificate revocation list (certificate revocation list, CRL); or the CA may implement revocation of the service authorization certificate through an online certificate status protocol (online certificate status protocol, OCSP) server.

For example, when all service producers corresponding to a service authorization certificate are deregistered, or a service consumer corresponding to the service authorization certificate is deregistered, the NRF sends the certificate revocation notification to the CA. After receiving the service authorization certificate revocation notification, the CA places a serial number of the service authorization certificate in a certificate revocation list, to revoke the service authorization certificate.

In a possible design, the CA receives a certificate revocation notification from a network management device, where the certificate revocation notification indicates that an authorized resource indicated by a service authorization certificate related to a network slice has been revoked. Further, the CArevokes the service authorization certificate. It should be understood that the revoked service authorization certificate is no longer used by the first network element to access the authorized resource indicated by the authorized resource information.

Optionally, when some or all network slices related to a service authorization certificate are revoked, the network management device sends the certificate revocation notification to the CA. For example, when all network slices corresponding to identifiers that are of the network slices and that are included in authorized resource information are revoked, the network management device sends the certificate revocation notification to the CA, so that the CA revokes a service authorization certificate corresponding to the authorized resource information.

Optionally, when the first network element has a plurality of service authorization certificates related to network slices, the certificate revocation notification sent by the network management device to the CA may indicate to revoke one or more of the plurality of service authorization certificates. For example, it is assumed that the first network element belongs to a network slice A, a network slice B, and a network slice C. In this case, the first network element may separately obtain a service authorization certificate related to the network slice A, a service authorization certificate related to the network slice B, and a service authorization certificate related to the network slice C. The network management device may send, to the CA, a certificate revocation notification of the service authorization certificate related to the network slice B.

Optionally, the CA may implement revocation of the service authorization certificate by placing a serial number of the service authorization certificate in a certificate revocation list; or the CA may implement revocation of the service authorization certificate through an OCSP server.

For example, when all service producers corresponding to a service authorization certificate are deregistered, or a service consumer corresponding to the service authorization certificate is deregistered, or a network slice that is related to the service authorization certificate and that serves as a service consumer is revoked, the network management device sends the certificate revocation notification to the CA. After receiving the service authorization certificate revocation notification, the CA places a serial number of the service authorization certificate in a certificate revocation list, to revoke the service authorization certificate.

In this design, when a service resource corresponding to the service authorization certificate does not exist, or an access subject of the service authorization certificate does not exist, the service authorization certificate is revoked, to avoid a problem that a network element accesses a service resource by using an old service authorization certificate, and improve accuracy of service authorization.

It can be learned from the method and design that, in this application, a service authorization certificate may be obtained when a network element is generated, or may be obtained when a network slice is initially established, and can change with resource configuration information. Therefore, a life cycle of the service authorization certificate can be synchronized with a life cycle of the network element, or the life cycle of the service authorization certificate can be synchronized with a life cycle of the network element, thereby improving a success rate of accessing a service by the network element, and reducing unnecessary signaling overheads.

Based on the method and design, this application provides the following two possible examples.

### Example 1:

In this example, each network element has only one service authorization certificate. The communication method provided in this example includes: At least one service producer network element registers with an NRF, where the at least one service producer may provide a service resource for different service consumers; any service consumer may obtain a service authorization certificate from a CA by using a proxy function of the NRF; and any service consumer may access, by using the service authorization certificate, a service resource that is of the service producer and that is bound to the service authorization certificate. When authorized resource information related to the service authorization certificate is updated, the NRF may assist the service consumer in interacting with the CA, to update the service authorization certificate. When all service producers corresponding to the service authorization certificate are deregistered, or a service consumer corresponding to the service authorization certificate is deregistered, the CA may revoke the service authorization certificate, to end a life cycle of the service authorization certificate. In this example, an NF 1 represents any service consumer, and an NF 2 represents any service producer corresponding to the service authorization certificate. For example, the NF 1 may perform an action performed by the first network element in any one of the foregoing methods and designs, and the NF 2 may perform an action performed by the second network element in any one of the foregoing methods and designs. A specific communication example includes four procedures.

### Procedure A (issuance of the service authorization certificate):

Before the procedure A starts, all network elements have been established, and have completed registration with the NRF. A method for registering the network elements with the NRF may be any existing technical method. This is not limited in this application. It should be understood that after the registration is completed, the NRF has obtained resource configuration information of all the network elements, and the NRF may determine authorized resource information of any network element based on the resource configuration information of all the network elements. For example, the NRF may determine, based on resource configuration information of a plurality of network elements serving as service producers, a network element type, a network element identifier, a network slice identifier, a service type, a resource type, or the like that can be accessed by a network element serving as a service consumer.

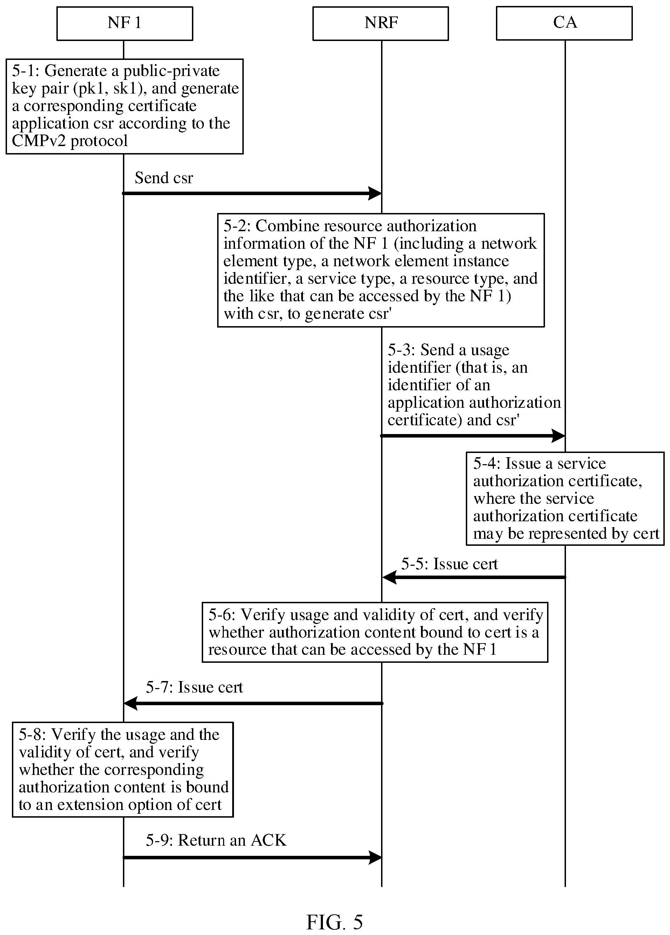

The procedure A may include any method and design in step S301. The following describes the method of the procedure A with reference to FIG. 5.

5-1: The NF 1 generates a public-private key pair (pk 1, sk 1) and stores sk 1. The NF 1 uses information such as pk 1 and an identifier (instance ID) of the NF 1 to generate a certificate application csr based on a CMPv2 protocol specification. Optionally, the NF 1 may further send, to the NRF, csr and a set of identifiers of network slices to which the NF 1 belongs (for example, an NSI-ID set or NSSAI).

5-2: The NRF combines resource authorization information of the NF 1 (including an NF type, an NF instance ID, a service type, a resource type, and the like that can be accessed by the NF 1) with csr, to generate a certificate application csr'. Optionally, csr' may further include the corresponding NSI-ID set (or the NSSAI).

5-3: The NRF sends a usage identifier (that is, an identifier of an application authorization certificate) and csr' to the CA.

5-4: The CA determines, by identifying the usage identifier, that csr' is a service authorization certificate application. The CA extracts, from csr', csr, the NF type, the NF instance ID, the service type, the resource type, and the like that can be accessed by the NF 1. Optionally, the CA may further extract the NSI-ID set (or the NSSAI) from csr'. The CA adds extracted authorization content to an extension option (for example, an SIA extension option) of the service authorization certificate, and the CA writes, into an extension option (for example, a key extended usage extension option) of the service authorization certificate, that usage of the service authorization certificate is service authorization. It should be understood that the CA may write the information into another supported extension option of the service authorization certificate. This is not limited in this application. The CA issues the service authorization certificate, and the service authorization certificate may be represented by cert.

5-5: The CA issues cert to the NRF.

5-6: After receiving cert, the NRF verifies usage and validity of cert. The NRF extracts authorization content (for example, including the NSI-ID set (or the NSSAI), and the NF type, the NF instance ID, the service type, or the resource type that can be accessed by the NF 1) bound to the extension option of cert, performs verification based on locally stored configuration resource information, and determines that the authorization content bound to cert is a resource that can be accessed by the NF 1.

Optionally, the certificate usage and validity verification includes but is not limited to the following verification: verification on whether the usage of the certificate is service authorization; verification on whether the certificate is within a validity period; verification on whether a certificate signature is valid; and verification on whether the certificate is revoked.

5-7: If the verification performed by the NRF succeeds, the NRF issues cert to the NF 1.

5-8: After receiving cert, the NF 1 verifies the usage and the validity of cert, and verifies whether the corresponding authorization content is bound to the extension option of cert.

5-9: If the verification performed by the NF 1 succeeds, the NF 1 returns an acknowledge character (acknowledge character, ACK) to the NRF, where the ACK indicates that the service authorization certificate is successfully issued.

### Procedure B (use of the service authorization certificate):

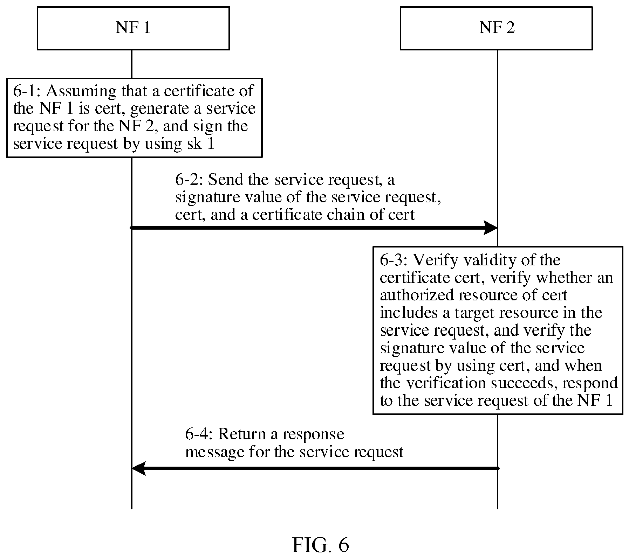

The procedure B may include any method and design in steps S302 to S305. The following describes the method of the procedure B with reference to FIG. 6.

6-1: It is assumed that the NF 1 corresponds to the NF 2 that expects to be accessed, and an authorization service certificate of the NF 1 is cert. In this case, the NF 1 may generate a service request (or referred to as an access request) for the NF 2, where the service request is used to request to access a target resource of the NF 2. The NF 1 signs the service request by using a private key sk 1 corresponding to cert.

6-2: The NF 1 sends, to the NF 2, the service request for the NF 2, a signature value of the service request, cert, and a certificate chain corresponding to cert. Optionally, the signature value of the service request may include information such as a timestamp or a random number, to prevent another device from performing a replay attack on a signature of the service request.

6-3: The NF 2 verifies validity of the certificate cert. The NF 2 verifies whether an authorized resource of cert includes a target resource in the service request (for example, whether the authorized resource of cert includes an NSI-ID, an NF type, an NF instance ID, a service type, and a resource type that correspond to the service request). The NF 2 verifies the signature value of the service request by using cert, that is, verifies a signature of sk 1 based on pk 1. When the verification succeeds, the NF 2 responds to the service request of the NF 1.

Optionally, the validity verification of the certificate includes but is not limited to the following verification: verification on whether usage of the certificate is service authorization; verification on whether the certificate is within a validity period; verification on whether a certificate signature is valid; and verification on whether the certificate is revoked. Optionally, the verification on whether the certificate is revoked may be implemented by using a CRL or OCSP. It should be understood that a verification action in step (3) may be implemented by using the certificate chain corresponding to cert. For a specific implementation, refer to any conventional manner in the art. This is not limited in this application.

6-4: The NF 2 returns a response message for the service request to the NF 1.

### Procedure C (update of the service authorization certificate):

When a service function of any network element changes (which is equivalent to a case in which resource configuration information of the network element changes), the network element may notify the NRF through a service update procedure. Correspondingly, the NRF stores changed resource configuration information, and notifies a network element that uses the network element as a service producer to actively change the service authorization certificate. Optionally, a method of the service update procedure may be any existing technical method. This is not limited in this application. In other words, when resource configuration information of any network element changes, a related action of the procedure C is triggered.

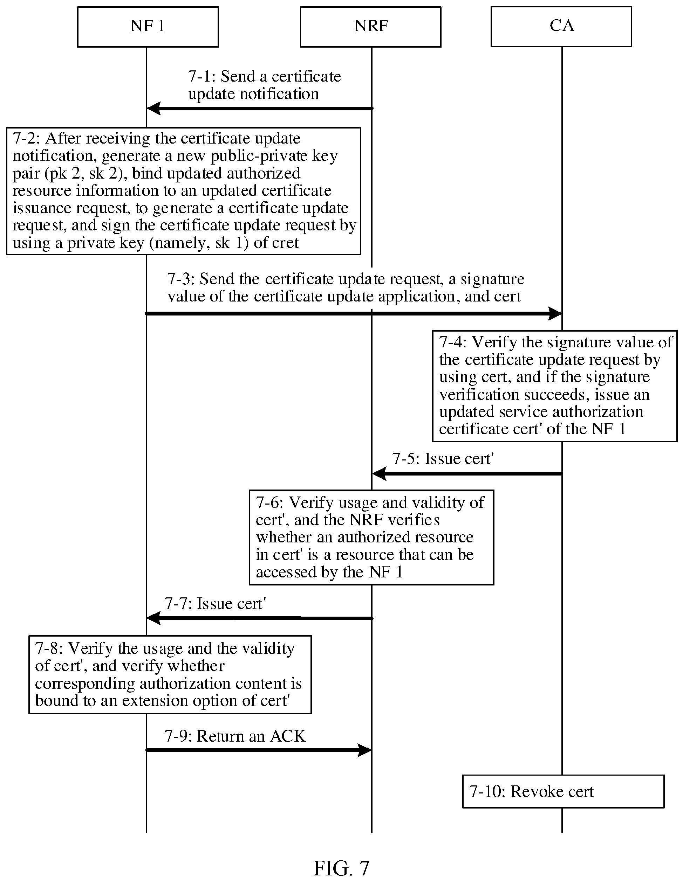

The procedure C may include any method and design in steps S401 to S405. The following describes the method of the procedure C with reference to FIG. 7.

7-1: After any NF 2 performs the service update procedure, the NRF receives updated resource configuration information of the NF 2. The NRF may infer, based on the updated resource configuration information of the NF 2, that an authorized resource that can be accessed by one or more related NFs 1 changes, and send a certificate update notification to the NFs 1. The NRF may further send, to the NF 1, changed authorized resource information (for example, including an NSI-ID set (or NSSAI), and an NF type, an NF instance ID, a service type, or a resource type that can be accessed after the update). In other words, the update of the resource configuration information of the NF 2 can trigger update of a service authorization certificate of the NF 1, so that a service relationship between the service producer and the service consumer is synchronized, thereby reducing a probability of an access failure of the first network element. In addition, because the NF 1 has established a secure channel with the NRF in this process, update of the corresponding authorized resource information is encrypted for transmission, and security is high.

7-2: After receiving the certificate update notification, the NF 1 generates a new public-private key pair (pk 2, sk 2), binds the updated authorized resource information to an updated certificate issuance request, to generate a certificate update request, and signs the certificate update request by using a private key (namely, sk 1) of cert.

7-3: The NF 1 sends the certificate update request, a signature value of the certificate update request, and cert to the CA.

7-4: The CA verifies the signature value of the certificate update request by using cert. If the signature verification succeeds, the CAissues an updated service authorization certificate of the NF 1 by using the certificate update request, where the updated service authorization certificate may be represented by cert'.

7-5: The CA issues cert' to the NRF.

7-6: After receiving cert' from the CA, the NRF verifies usage and validity of cert'. The NRF extracts authorization content (for example, including the NSI-ID set (or the NSSAI), the NF type, the NF instance ID, the service type, and the resource type) bound to an extension option of cert', and verifies whether an authorized resource in cert' is a resource that can be accessed by the NF 1.

Optionally, the validity verification of the certificate includes but is not limited to the following verification: verification on whether usage of the certificate is service authorization; verification on whether the certificate is within a validity period; verification on whether a certificate signature is valid; and verification on whether the certificate is revoked. Optionally, the verification on whether the certificate is revoked may be implemented by using a CRL or OCSP.

7-7: If the verification performed by the NRF succeeds, the NRF issues cert' to the NF 1.

7-8: After receiving cert', the NF 1 verifies the usage and the validity of cert', and verifies whether the corresponding authorization content is bound to the extension option of cert'.

7-9: If the verification performed by the NF 1 succeeds, the NF 1 returns an ACK to the NRF, to determine that the service authorization certificate is successfully issued.

7-10: After the CA determines to issue cert', the CA may revoke cert.

### Procedure D (revocation of the service authorization certificate):

When a life cycle of any network element ends, the NRF needs to be notified through a deregistration (deregistration) procedure, so that the NRF can learn of information indicating that the network element has been deregistered. In this case, an authorization certificate revocation procedure of the corresponding network element may be triggered. Optionally, a method of the deregistration (deregistration) procedure may be any existing technical method. This is not limited in this application. When all service producers corresponding to the service authorization certificate are deregistered, or a service consumer corresponding to the service authorization certificate is deregistered, the CA may revoke the service authorization certificate, that is, trigger an action of the procedure D.

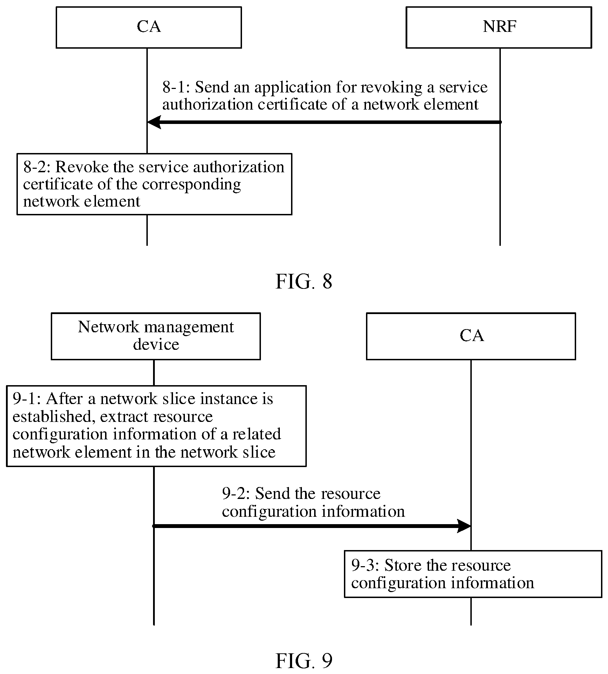

The procedure D may include any method and design corresponding to an action of revoking the service authorization certificate by the CA. The following describes the method of the procedure D with reference to FIG. 8.

8-1: The NRF sends, to the CA, an application for revoking a service authorization certificate of a network element. A secure channel (for example, a TLS channel or an IPsec channel) has been established between the NRF and the CA through identity authentication.

8-2: The CA revokes the service authorization certificate of the corresponding network element (for example, puts a serial number of the service authorization certificate in a certificate revocation list or revokes the service authorization certificate through an OCSP server).

According to the method shown in Example 1, a life cycle of a service authorization certificate can be synchronized with a life cycle of a network element, instead of depending on a preset validity period to determine the life cycle, so that flexibility of service authorization is improved. In addition, because the network element may obtain the service authorization certificate when being established, and the service authorization certificate may be used to apply for different services, the network element does not need to obtain a certificate again during each service application. This avoids frequent application for a new certificate, and reduces a waste of resources. When a service function of a service producer corresponding to the service authorization certificate changes, the service authorization certificate may be updated synchronously. When one or more network elements are deregistered, the corresponding service authorization certificate may be revoked synchronously. It is clear that the old service authorization certificate cannot be used to access the service producer after the update or revocation. Therefore, a case in which the old service authorization certificate can still be used can be avoided, and accuracy of service authorization is improved. Because a process of using the service authorization certificate is implemented by signing and verifying a service request, no other encryption protection is needed, thereby improving data transmission security, and reducing signaling consumption caused by separate encryption protection.

### Example 2:

In this example, each network element belongs to n network slices. Therefore, there may be n service authorization certificates, where n is a positive integer. The communication method provided in this example includes: Each network slice obtains one service authorization certificate when being established. A network element in the network slice may obtain the service authorization certificate. The network element in the network slice may access, as a service consumer, a service resource that is of a service producer and that is bound to the service authorization certificate. When the service resource of the service producer (including another network slice) bound to the service authorization certificate corresponding to the network slice is updated, the network element in the network slice may update the service authorization certificate. When the network slice is revoked, a CA may revoke the service authorization certificate related to the network slice, to end a life cycle of the service authorization certificate. In the following example, an NF 3 belongs to a network slice 1, the NF 3 may perform an action performed by the first network element in any one of the foregoing methods and designs, and an NF 4 may perform an action performed by the second network element in any one of the foregoing methods and designs. A specific communication example includes five procedures.

### Procedure A (network slice establishment):

When a network management device establishes each network slice, the CA may locally store resource configuration information of each network slice. In addition, the network management device may interact with the CA, to perform transmission of the resource configuration information of the network slice. Optionally, the CA may further locally store the resource configuration information of each network slice through an NRF.

The following describes the method of the procedure A with reference to FIG. 9.

9-1: After a network slice instance is established, the network management device extracts resource configuration information of a related network element in the network slice. When the network element is generated, the resource configuration information of the network element is stored in the network management device; or the resource configuration information of the network element is stored in the NRF. A detailed storage process is described in the method in Example 1.

9-2: The network management device sends the resource configuration information (where the resource configuration information includes an identifier NSI-ID of the network slice and the resource configuration information of the related network element in the network slice) to the CA. Optionally, an action of the network management device may alternatively be performed by the NRF. For example, the NRF may send the resource configuration information (the identifier NSI-ID of the network slice and the resource configuration information of the related network element in the network slice) to the CA. A detailed method is described in the method in Example 1.

9-3: The CA stores the resource configuration information (the NSI-ID and the resource configuration information of the related network element).

### Procedure B (issuance of a service authorization certificate):

Before the procedure B starts, the CA has stored resource configuration information of a plurality of network slices. Therefore, the CA may determine authorized resource information used when any network element (for example, the NF 3) in a network slice (for example, the network slice 1) serves as a service consumer. The authorized resource information includes a resource that can be accessed by the NF 3, for example, a resource at a granularity of per (per) NF type, or a resource at a granularity of per NF instance ID. In this way, the authorized resource information may be at a granularity of per service, so that accuracy of service authorization can be improved.

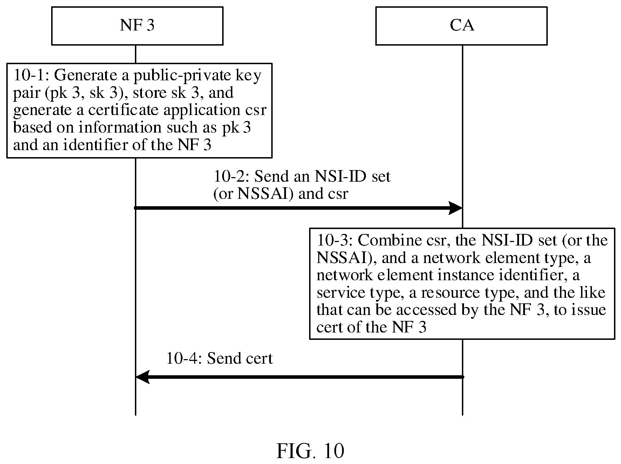

The procedure B may include any method and design in step S301. The following describes the method of the procedure B with reference to FIG. 10.

10-1: The NF 3 in the network slice 1 generates a public-private key pair (pk 3, sk 3), and stores sk 3. The NF 3 generates a certificate application csr based on information such as pk 3 and an identifier of the NF 3.

10-2: The NF 3 sends a corresponding NSI-ID set (or NSSAI) and csr to the CA.

10-3: The CA combines csr, the NSI-ID set (or the NSSAI), and an NF type, an NF instance ID, a service type, a resource type, and the like that can be accessed by the NF 3 (for example, writes the information into an SIA extension option of the service authorization certificate), to issue an authorization certificate cert of the NF 3.

Optionally, the CA may obtain service authorization information of the NF 3 (including the NSI-ID set (or the NSSAI), and the NF type, the NF instance ID, the service type, the resource type, and the like that can be accessed by the NF 3) through the NRF.

Optionally, the CA may combine, through the NRF, csr, the NSI-ID set (or the NSSAI), and the NF type, the NF instance ID, the service type, the resource type, and the like that can be accessed by the NF 3. A detailed combination process is described in the method in Example 1.

10-4: The CA sends cert to the NF 3.

### Procedure C (use of the service authorization certificate):

The procedure C may include any method and design in steps S302 to S305, and is used by any NF 3 in the network slice to use the service authorization certificate to make an application to and access a network element (for example, the NF 4) serving as a service producer. A specific method of the procedure C in this example may be the same as or different from the method of the procedure B in Example 1.

### Procedure D (update of the service authorization certificate):

When a service function of any network slice (for example, a network slice 2) changes (which is equivalent to a case in which resource configuration information of the network slice changes), a network element in the network slice may notify the NRF through a service update procedure. Correspondingly, the NRF stores changed resource configuration information, and notifies a network element (for example, the NF 3, where the NF 3 may belong to the network slice 2) that uses the network slice as a service producer to actively update the service authorization certificate. In other words, when resource configuration information of any network slice changes, a related action of the procedure D is triggered, to update authorized resource information in the related service authorization certificate. Because only a change at a network slice granularity triggers the related action of the procedure D, a probability of triggering the update of the service authorization certificate is low.

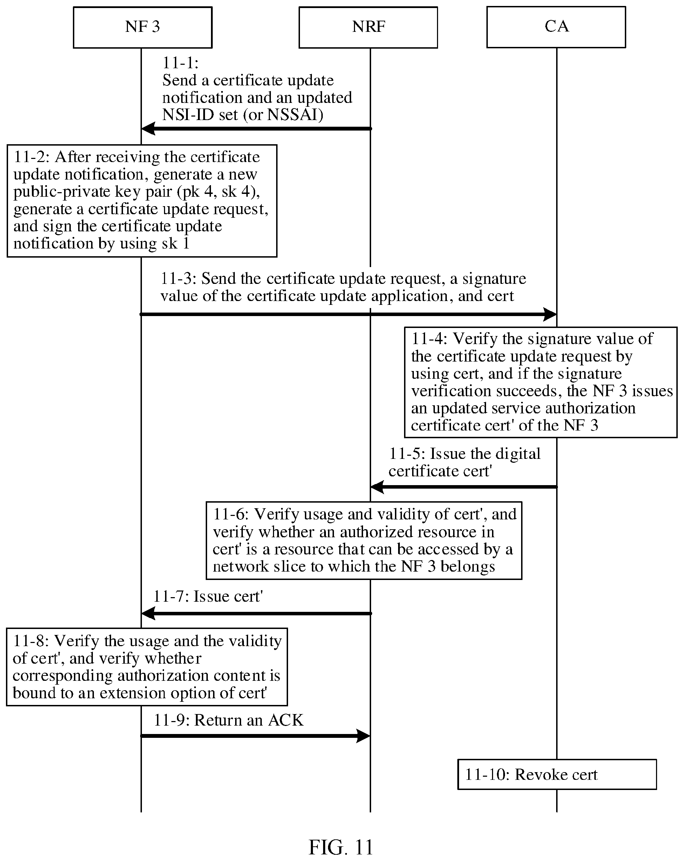

The procedure D may include any method and design in steps S401 to S405. The following describes the method of the procedure D with reference to FIG. 11.

11-1: After any network slice 2 performs a service update procedure, the NRF receives updated resource configuration information of the network slice 2. The NRF may send a certificate update notification and an updated NSI-ID set (or NSSAI) to one or more related NFs 3 based on the updated resource configuration information of the network slice 2. The NRF may further send, to the NF 3, an NF type, an NF instance ID, a service type, or a resource type that can be accessed after the update. In addition, because the NF 3 has established a secure channel with the NRF in this process, update of the corresponding resource configuration information is encrypted for transmission, and security is high.

11-2: After receiving the certificate update notification, the NF 3 generates a new public-private key pair (pk 4, sk 4), binds the updated resource configuration information (including the NS-ID set (or the NSSAI), and the NF type, the NF instance ID, the service type, the resource type, or the like that can be accessed) to an updated certificate issuance request, to generate a certificate update request, and signs the certificate update request by using a private key (namely, sk 1) of cert.

11-3: The NF 3 sends the certificate update request, a signature value of the certificate update request, and cert to the CA.

11-4: After receiving the certificate update request from the NF 3, the CA verifies the signature value of the certificate update request by using cert of the NF 3. If the signature verification succeeds, the NF 3 issues an updated service authorization certificate of the NF 3 based on resource configuration information (also referred to as a profile) in the certificate update request, where the updated service authorization certificate may be represented by cert'.

11-5: The CA issues cert' to the NRF.

11-6: After receiving cert' from the CA, the NRF verifies usage and validity of cert'. The NRF extracts authorization content (including the NSI-ID set (or the NSSAI), the NF type, the NF instance ID, the service type, the resource type, and the like) bound to an extension option of cert', and verifies whether an authorized resource in cert' is a resource that can be accessed by the network slice to which the NF 3 belongs.

Optionally, the validity verification of the certificate includes but is not limited to the following verification: verification on whether usage of the certificate is service authorization; verification on whether the certificate is within a validity period; verification on whether a certificate signature is valid; and verification on whether the certificate is revoked. Optionally, the verification on whether the certificate is revoked may be implemented by using a CRL or OCSP.

11-7: If the verification performed by the NRF succeeds, the NRF issues cert' to NF 3.

11-8: After receiving cert', the NF 3 verifies the usage and the validity of cert', and verifies whether the corresponding authorization content is bound to the extension option of cert'.

11-9: If the verification performed by the NF 3 succeeds, the NF 3 returns an ACK to the NRF, to determine that the service authorization certificate is successfully issued.

11-10: After the CA determines to issue cert', the CA may revoke cert.

### Procedure E (revocation of the service authorization certificate):

When a life cycle of any network slice ends, the network management device revokes a service function of the network slice. In this case, an authorization certificate revocation procedure of the corresponding network slice may be triggered. Optionally, a method of the network slice revocation procedure may be any existing technical method. This is not limited in this application. When network slices in which all service producers (for example, the network slice 2) corresponding to the service authorization certificate are located are deregistered, the CA may revoke the service authorization certificate, that is, trigger an action of the procedure E.

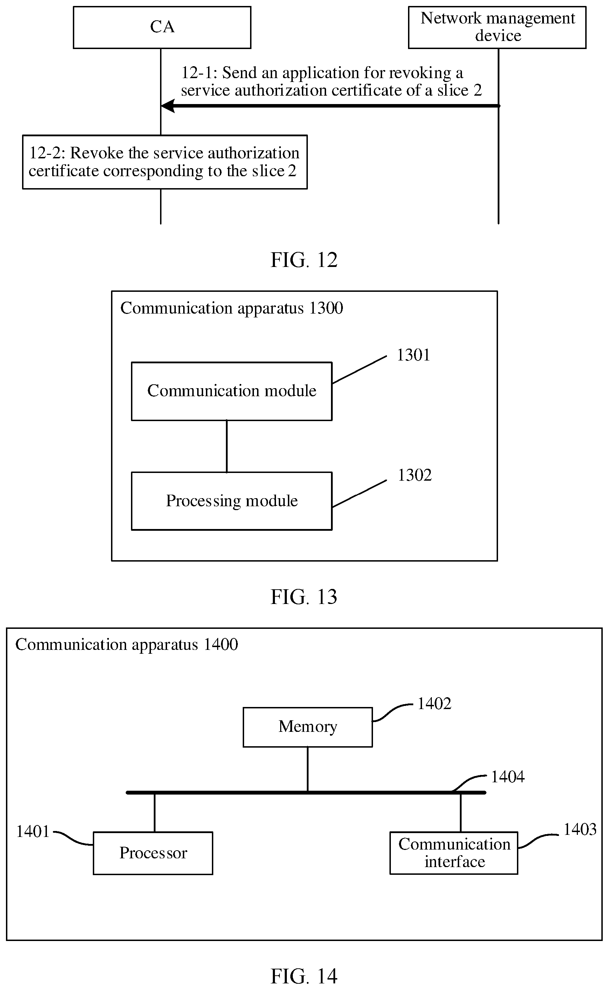

The procedure E may include any method and design corresponding to an action of revoking the service authorization certificate by the CA. The following describes the method of the procedure E with reference to FIG. 12.

12-1: The network management device sends, to the CA, an application for revoking the service authorization certificate of the network slice 2. Optionally, an action of the network management device may alternatively be performed by the NRF. For example, the NRF sends, to the CA, the application for revoking the service authorization certificate of the network slice 2. A detailed process is the method in Example 1.

12-2: The CArevokes the service authorization certificate corresponding to the network slice 2 (for example, puts a serial number of the service authorization certificate into a certificate revocation list or revokes the service authorization certificate through an OCSP server).

According to the method shown in Example 2, a life cycle of a service authorization certificate can be synchronized with a life cycle of a network slice, instead of depending on a preset validity period to determine the life cycle, so that flexibility of service authorization is improved. In addition, because the network slice may obtain the service authorization certificate when being established, and the service authorization certificate may be used by a network element in the network slice to apply for different services, the network element does not need to obtain a certificate again during each service application. This avoids frequent application for a new certificate, and reduces a waste of resources. When a service function of a service producer corresponding to the service authorization certificate changes, the service authorization certificate may be updated synchronously. When one or more network slices are deregistered, the corresponding service authorization certificate may be revoked synchronously. It is clear that the old service authorization certificate cannot be used to access the service producer after the update or revocation. Therefore, a case in which the old service authorization certificate can still be used can be avoided, and accuracy of service authorization is improved. Because a process of using the service authorization certificate is implemented by signing and verifying a service request, no other encryption protection is needed, thereby improving data transmission security, and reducing signaling consumption caused by separate encryption protection.

Based on a same technical concept, this application further provides a communication apparatus. The communication apparatus may be used in the communication system shown in FIG. 2, and is configured to implement the communication methods provided in the foregoing embodiments. As shown in FIG. 13, the communication apparatus 1300 includes a communication module 1301 and a processing module 1302.

The communication module 1301 is configured to receive and send data. Optionally, the communication module 1301 may include a communication interface.

The processing module 1302 is configured to perform the steps performed by the first network element, the second network element, or the CA in the communication methods provided in the foregoing embodiments. For a specific function of the processing module 1302, refer to related descriptions in the foregoing embodiments. Details are not described herein again.

In an implementation, when the communication apparatus is configured to implement an action of the first network element, the communication module 1301 is configured to obtain a service authorization certificate, where the service authorization certificate includes authorized resource information, and the service authorization certificate is used by the first network element to access an authorized resource indicated by the authorized resource information. The processing module 1302 is configured to: generate a service request, and sign the service request, where the service request is used to request to access a target resource of a second network element, and the target resource is included in the authorized resource. The communication module 1301 is further configured to: send the service authorization certificate and the signed service request to the second network element; and receive a service response from the second network element, where the response message indicates whether the second network element provides an access service corresponding to the target resource.

In an implementation, when the communication apparatus is configured to implement an action of the second network element, the communication module 1301 is configured to receive a service authorization certificate and a signed service request from a first network element, where the service authorization certificate includes authorized resource information, the service authorization certificate is used by the first network element to access an authorized resource indicated by the authorized resource information, the service request is used to request to access a target resource of the second network element, and the target resource is included in the authorized resource. The processing module 1302 is configured to determine a service response based on the service authorization certificate and the signed service request, where the response message indicates whether the second network element provides an access service corresponding to the target resource. The communication module 1301 is further configured to send the service response to the first network element.

In an implementation, when the communication apparatus is configured to implement an action of the CA, the communication module 1301 is configured to receive a certificate issuance request from a first network element. The processing module 1302 is configured to determine a service authorization certificate, where the service authorization certificate includes authorized resource information, and the service authorization certificate is used by the first network element to access an authorized resource indicated by the authorized resource information. The communication module 1301 is further configured to send the service authorization certificate to the first network element.

It should be noted that division into the modules in embodiments of this application is an example, and is merely logical function division. In actual implementation, there may be another division manner. In addition, functional units in embodiments of this application may be integrated into one processing unit, or may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in a form of a software product. The computer software product is stored in a storage medium and includes several instructions for instructing a computer device (which may be a personal computer, a server, a network device, or the like) or a processor (processor) to perform all or some of the steps of the methods in embodiments of this application. The storage medium includes any medium that can store program code, for example, a USB flash drive, a removable hard disk, a read-only memory (read-only memory, ROM), a random access memory (random access memory, RAM), a magnetic disk, or an optical disc.

Based on a same technical concept, an embodiment of this application further provides another communication apparatus. The communication apparatus 1400 may implement the communication methods provided in the foregoing embodiments, and has a function of the processor provided in the foregoing embodiments. As shown in FIG. 14, the communication apparatus 1400 includes a memory 1402 and a processor 1401. Optionally, the communication apparatus 1400 further includes a communication interface 1403. The communication interface 1403, the processor 1401, and the memory 1402 are connected to each other.

Optionally, the communication interface 1403, the processor 1401, and the memory 1402 are connected to each other through a bus 1404. The bus 1404 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 14, but this does not indicate that there is only one bus or only one type of bus.

The communication interface 1403 is configured to receive and send data, to implement communication with a device other than the communication apparatus.

For a function of the processor 1401, refer to the descriptions in the foregoing embodiments. Details are not described herein again. The processor 1401 may be a central processing unit (central processing unit, CPU), a network processor (network processor, NP), a combination of a CPU and an NP, or the like. The processor 1401 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), a generic array logic (generic array logic, GAL), or any combination thereof. The processor 1401 may implement the function by using hardware or certainly by using hardware executing corresponding software.

The memory 1402 is configured to store program instructions and the like. Specifically, the program instructions may include program code, and the program code includes computer operation instructions. The memory 1402 may include a random access memory (random access memory, RAM), or may further include a non-volatile memory (non-volatile memory), for example, at least one magnetic disk memory. The processor 1401 executes the program instructions stored in the memory 1402, to implement the function, to implement the methods provided in the foregoing embodiments. For example, the memory 1402 may include the first network element, the second network element, or the CA shown in embodiments of this application.

Based on a same technical concept, an embodiment of this application further provides a computer program. When the computer program is run on a computer, the computer is enabled to perform the method provided in the foregoing embodiments.

Based on a same technical concept, an embodiment of this application further provides a computer-readable storage medium. The computer-readable storage medium stores a computer program. When the computer program is run on a computer, the computer is enabled to perform the method provided in the foregoing embodiments.

The storage medium may be any usable medium that can be accessed by the computer. By way of example, and not limitation, the computer-readable medium may include a RAM, a ROM, an EEPROM, a CD-ROM, or another optical disc storage or disk storage medium, or another magnetic storage device, or any other medium that can carry or store expected program code in a form of an instruction or a data structure and that can be accessed by the computer.

Based on the foregoing embodiments, an embodiment of this application further provides a chip. The chip is configured to read a computer program stored in a memory, to implement the methods provided in the foregoing embodiments. Optionally, the chip may include a processor and a memory. The processor is coupled to the memory, and configured to read the computer program stored in the memory, to implement the methods provided in the foregoing embodiments.

Based on the foregoing embodiments, an embodiment of this application provides a chip system. The chip system includes a processor, configured to support a computer apparatus in implementing a function related to the terminal device in the foregoing embodiments. In a possible design, the chip system further includes a memory, and the memory is configured to store a program and data that are necessary for the computer apparatus. The chip system may include a chip, or may include a chip and another discrete component.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. In this way, this application is intended to cover these modifications and variations of this application provided that they fall within the scope of protection of the claims of this application and their equivalent technologies.

## Claims

1. A communication method, wherein the method comprises:
obtaining, by a first network element, a service authorization certificate, wherein the service authorization certificate comprises authorized resource information, and the service authorization certificate is used by the first network element to access an authorized resource indicated by the authorized resource information;
generating, by the first network element, a service request, and signing the service request, wherein the service request is used to request to access a target resource of a second network element, and the target resource is comprised in the authorized resource;
sending, by the first network element, the service authorization certificate and the signed service request to the second network element; and
receiving, by the first network element, a service response from the second network element, wherein the response message indicates whether the second network element provides an access service corresponding to the target resource.

2. The method according to claim 1, wherein the authorized resource information comprises at least one of the following: an identifier of a network element that is authorized to be accessed, a type of a network element that is authorized to be accessed, an identifier of a network slice that is authorized to be accessed, a type of a service that is authorized to be accessed, or a type of a resource that is authorized to be accessed.

3. The method according to claim 1 or 2, wherein the obtaining, by a first network element, a service authorization certificate comprises:
sending, by the first network element, a certificate issuance request to a certificate authority; and
receiving, by the first network element, the service authorization certificate from the certificate authority, wherein the authorized resource information is determined based on resource configuration information of at least one third network element, and the at least one third network element comprises the second network element.

4. The method according to claim 3, wherein the sending, by the first network element, a certificate issuance request to a certificate authority comprises:
sending, by the first network element, the certificate issuance request to the certificate authority through a network repository function network element, to enable the network repository function network element to determine the authorized resource information based on the resource configuration information of the at least one third network element and send the authorized resource information to the certificate authority; and
the receiving, by the first network element, the service authorization certificate from the certificate authority comprises:
receiving, by the first network element, the service authorization certificate from the certificate authority through the network repository function network element.

5. The method according to claim 3 or 4, wherein the first network element is a network element in a network slice, the certificate issuance request further comprises an identifier of the network slice, and when resource configuration information of a fourth network element comprises the identifier of the network slice, the authorized resource information comprises an identifier of the fourth network element, and the at least one third network element comprises the fourth network element.

6. The method according to any one of claims 1 to 4, wherein the method further comprises:
receiving, by the first network element, a certificate update notification from a network repository function network element, wherein the certificate update notification indicates that resource configuration information of at least one fifth network element has been updated;
determining, by the first network element, a certificate update request based on the certificate update notification, and signing the certificate update request;
sending, by the first network element, the service authorization certificate and the signed certificate update request to the certificate authority; and
receiving, by the first network element, an updated service authorization certificate from the network repository function network element, and updating the service authorization certificate; or receiving, by the first network element, an updated service authorization certificate from the certificate authority, and updating the service authorization certificate, wherein the updated service authorization certificate is used by the first network element to access a target resource in the resource configuration information of the at least one fifth network element.

7. A communication method, wherein the method comprises:
receiving, by a second network element, a service authorization certificate and a signed service request from a first network element, wherein the service authorization certificate comprises authorized resource information, the service authorization certificate is used by the first network element to access an authorized resource indicated by the authorized resource information, the service request is used to request to access a target resource of the second network element, and the target resource is comprised in the authorized resource;
determining, by the second network element, a service response based on the service authorization certificate and the signed service request, wherein the response message indicates whether the second network element provides an access service corresponding to the target resource; and
sending, by the second network element, the service response to the first network element.

8. The method according to claim 7, wherein the authorized resource information comprises at least one of the following: an identifier of a network element that is authorized to be accessed, a type of a network element that is authorized to be accessed, an identifier of a network slice that is authorized to be accessed, a type of a service that is authorized to be accessed, or a type of a resource that is authorized to be accessed.

9. The method according to claim 7 or 8, wherein after the receiving, by a second network element, a service authorization certificate and a signed service request from a first network element, the method further comprises:
verifying, by the second network element, a signature value of the service request based on the service authorization certificate, and determining that the verification succeeds.

10. A communication method, wherein the method comprises:
receiving, by a certificate authority, a certificate issuance request from a first network element;
determining, by the certificate authority, a service authorization certificate, wherein the service authorization certificate comprises authorized resource information, and the service authorization certificate is used by the first network element to access an authorized resource indicated by the authorized resource information; and
sending, by the certificate authority, the service authorization certificate to the first network element.

11. The method according to claim 10, wherein the authorized resource information comprises at least one of the following: an identifier of a network element that is authorized to be accessed, a type of a network element that is authorized to be accessed, an identifier of a network slice that is authorized to be accessed, a type of a service that is authorized to be accessed, or a type of a resource that is authorized to be accessed.

12. The method according to claim 10 or 11, wherein the receiving, by a certificate authority, a certificate issuance request from a first network element comprises:
receiving, by the certificate authority, the certificate issuance request from the first network element through a network repository function network element; and
receiving, by the certificate authority, the authorized resource information from the network repository function network element, wherein the authorized resource information is determined based on resource configuration information of at least one third network element; and
the sending, by the certificate authority, the service authorization certificate to the first network element comprises:
sending, by the certificate authority, the service authorization certificate to the first network element through the network repository function network element.

13. The method according to any one of claims 10 to 12, wherein the first network element is a network element in a network slice, the certificate issuance request further comprises an identifier of the network slice, and when resource configuration information of a fourth network element comprises the identifier of the network slice, the certificate authority determines that the authorized resource information comprises an identifier of the fourth network element, and the at least one third network element comprises the fourth network element.

14. The method according to any one of claims 10 to 13, wherein the method further comprises:
receiving, by the certificate authority, the service authorization certificate and a signed certificate update request from the first network element;
determining, by the certificate authority, an updated service authorization certificate based on the service authorization certificate and the signed certificate update request; and
sending, by the certificate authority, the updated service authorization certificate to the network repository function network element; or sending, by the certificate authority, the updated service authorization certificate to the first network element, wherein the updated service authorization certificate is used by the first network element to access a target resource in resource configuration information of at least one fifth network element.

15. The method according to any one of claims 10 to 14, wherein the method further comprises:
receiving, by the certificate authority, a certificate revocation notification from the network repository function network element; or receiving, by the certificate authority, a certificate revocation notification from a network management device, wherein the certificate revocation notification indicates that the authorized resource indicated by the service authorization certificate has been revoked; and
revoking, by the certificate authority, the service authorization certificate, wherein the revoked service authorization certificate is no longer used by the first network element to access the authorized resource indicated by the authorized resource information.

16. A communication method, wherein the method comprises:
receiving, by a network repository function network element, a certificate issuance request from a first network element, wherein the certificate issuance request is used to request to obtain a service authorization certificate, and the service authorization certificate is used by the first network element to access an authorized resource indicated by authorized resource information;
determining, by the network repository function network element, the authorized resource information based on resource configuration information of at least one third network element; and
sending, by the network repository function network element, the authorized resource information to a certificate authority, wherein the service authorization certificate comprises the authorized resource information.

17. The method according to claim 16, wherein the authorized resource information comprises at least one of the following: an identifier of a network element that is authorized to be accessed, a type of a network element that is authorized to be accessed, an identifier of a network slice that is authorized to be accessed, a type of a service that is authorized to be accessed, or a type of a resource that is authorized to be accessed.

18. The method according to claim 16 or 17, wherein the method further comprises:
sending, by the network repository function network element, a certificate update notification to the first network element, wherein the certificate update notification indicates that resource configuration information of at least one fifth network element has been updated; and
sending, by the network repository function network element, an updated service authorization certificate to the first network element, wherein the updated service authorization certificate is used by the first network element to access a target resource in the resource configuration information of the at least one fifth network element.

19. The method according to any one of claims 16 to 18, wherein the method further comprises:
sending, by the network repository function network element, a certificate revocation notification to the certificate authority, wherein the certificate revocation notification indicates that the authorized resource indicated by the service authorization certificate has been revoked, and the revoked service authorization certificate is no longer used by the first network element to access the authorized resource indicated by the authorized resource information.

20. A communication method, wherein the method comprises:
obtaining, by a first network element, a service authorization certificate, wherein the service authorization certificate comprises authorized resource information, and the service authorization certificate is used by the first network element to access an authorized resource indicated by the authorized resource information;
generating, by the first network element, a service request, and signing the service request, wherein the service request is used to request to access a target resource of a second network element, and the target resource is comprised in the authorized resource;
sending, by the first network element, the service authorization certificate and the signed service request to the second network element;
determining, by the second network element, a service response based on the service authorization certificate and the signed service request, wherein the response message indicates whether the second network element provides an access service corresponding to the target resource; and
sending, by the second network element, the service response to the first network element.

21. A communication apparatus, wherein the apparatus comprises:
a communication module, configured to obtain a service authorization certificate, wherein the service authorization certificate comprises authorized resource information, and the service authorization certificate is used by a first network element to access an authorized resource indicated by the authorized resource information; and
a processing module, configured to: generate a service request, and sign the service request, wherein the service request is used to request to access a target resource of a second network element, and the target resource is comprised in the authorized resource, wherein
the communication module is further configured to: send the service authorization certificate and the signed service request to the second network element; and receive a service response from the second network element, wherein the response message indicates whether the second network element provides an access service corresponding to the target resource.

22. A communication apparatus, wherein the apparatus comprises:
a communication module, configured to receive a service authorization certificate and a signed service request from a first network element, wherein the service authorization certificate comprises authorized resource information, the service authorization certificate is used by the first network element to access an authorized resource indicated by the authorized resource information, the service request is used to request to access a target resource of a second network element, and the target resource is comprised in the authorized resource; and
a processing module, configured to determine a service response based on the service authorization certificate and the signed service request, wherein the response message indicates whether the second network element provides an access service corresponding to the target resource, wherein
the communication module is further configured to send the service response to the first network element.

23. A communication apparatus, wherein the apparatus comprises:
a communication module, configured to receive a certificate issuance request from a first network element; and
a processing module, configured to determine a service authorization certificate, wherein the service authorization certificate comprises authorized resource information, and the service authorization certificate is used by the first network element to access an authorized resource indicated by the authorized resource information, wherein
the communication module is further configured to send the service authorization certificate to the first network element.

24. A communication apparatus, wherein the apparatus comprises:
a communication module, configured to receive a certificate issuance request from a first network element, wherein the certificate issuance request is used to request to obtain a service authorization certificate, and the service authorization certificate is used by the first network element to access an authorized resource indicated by the authorized resource information; and
a processing module, configured to determine the authorized resource information based on resource configuration information of at least one third network element, wherein
the communication module is further configured to send the authorized resource information to certificate authority, wherein the service authorization certificate comprises the authorized resource information.

25. A communication system, comprising the communication apparatus according to claim 21 and the communication apparatus according to claim 22.

26. The communication system according to claim 25, further comprising the communication apparatus according to claim 23.

27. The communication system according to claim 25 or 26, further comprising the communication apparatus according to claim 24.

28. A communication device, comprising a communication interface, a memory, and a processor, wherein
the communication interface is configured to receive and send data;
the memory is configured to store program instructions and data; and
the processor is configured to read the program instructions and the data in the memory, to implement the method according to any one of claims 1 to 20.

29. A computer-readable storage medium, wherein the computer-readable storage medium stores a computer program, and when the computer program is run on a computer, the computer is enabled to perform the method according to any one of claims 1 to 20.

30. A chip, wherein the chip comprises a processor and a memory, and the processor is coupled to the memory, and configured to read a computer program stored in the memory, to perform the method according to any one of claims 1 to 20.
